# EUROPÄISCHE PATENTSCHRIFT

(11) **EP 3 747 848 B1**
(45) Veröffentlichungstag und Bekanntmachung des Hinweises auf die Patenterteilung: **26.05.2021**
(21) Anmeldenummer: 19179027.8
(22) Anmeldetag: 07.06.2019
(51) Int. Cl.: C04B 28/00

(54) **THORON-REDUZIERENDE UND RAUMKLIMA-VERBESSERNDE AKTIVKOHLE-BEIMISCHUNG ZU LEHMPUTZSYSTEMEN**
THORON-REDUCING AND ROOM AIR IMPROVING ACTIVATED CARBON ADMIXTURE FOR LOAM PLASTER SYSTEMS
MÉLANGE CONTENANT DU CARBON ACTIVÉ POUR RÉDUIRE LE THORON ET AMÉLIORER LE CLIMAT INTÉRIEUR DANS LES SYSTÈMES DE PLÂTRAGE DE TERREAU

(43) Veröffentlichungstag der Anmeldung: 09.12.2020
(73) Patentinhaber: Bierig, Marius, 24977 Langballig (DE)
(72) Erfinder: Bierig, Marius, 24977 Langballig (DE)
(74) Vertreter: Vossius & Partner Patentanwälte Rechtsanwälte mbB

(56) Entgegenhaltungen:
- EP-A1- 2 426 096
- WO-A1-2016/078966
- CH-A2- 701 703
- CN-A- 107 954 737
- DE-A1- 19 800 784
- DE-U1- 9 100 684
- DE-U1- 20 008 006
- JP-A- H06 258 443
- KR-A- 20020 026 921
- KR-A- 20030 008 857
- ZHOU QINGZHI ET AL: "Prediction of radon removal efficiency for a flow-through activated charcoal system and radon mitigation characteristics", RADIATION MEASUREMENTS, ELSEVIER, AMSTERDAM, NL, Bd. 119, 16. Oktober 2018 (2018-10-16), Seiten 112-120, XP085545347, ISSN: 1350-4487, DOI: 10.1016/J.RADMEAS.2018.10.004
- IIMOTO ET AL: "Development of a technique for the measurement of the radon exhalation rate using an activated charcoal collector", JOURNAL OF ENVIRONMENTAL RADIOACTIVITY, ELSEVIER APPLIED SCIENCE PUBLISHERS, BARKING, GB, Bd. 99, Nr. 4, 15. März 2008 (2008-03-15), Seiten 587-595, XP022535407, ISSN: 0265-931X, DOI: 10.1016/J.JENVRAD.2007.08.024

## Beschreibung

### Technisches Gebiet

Die vorliegende Erfindung bezieht sieh auf ein Baustoffmaterial, welches eine Lehmbasis und eine Beimischung umfassend Aktivkohle enthält, um das Raumklima zu verbessern und um die Thoronexhalation von Lehm zu reduzieren. Des Weiteren umfasst die vorliegende Erfindung einen Lehmputz, sowie ein Verfahren zur Herstellung eines Baustoffmaterials.

Seit ca. 20 Jahren gibt es von verschiedenen Herstellern Lehmputze, die mit stetig wachsendem Marktanteil zur Oberflächengestaltung in Bauten eingesetzt werden. In der Regel werden massive Wände als auch Plattensysteme mit meist mehrlagigen Lehmputzsystemen beschichtet. Es ist vor allem die ausgezeichnete feuchte- und wärmeregulierende Wirkkraft auf das Raumklima von Innenräumen, die den modernen Lehmputzsystemen mittlerweile eine stabile Position auf dem Baustoffmarkt verschafft. Neben den raumklimatischen Vorteilen haben die Lehmputze gegenüber konventionellen Industrieputzen folgende Vorteile:
- geringer Energieverbrauch in der Herstellung
- regionale Herstellung ermöglicht die Nutzung lokaler Rohstoffe und den Aufbau von lokalen Wirtschaftskreisläufen
- Entlastung von Bauschuttdeponien, da problemlos renaturalisierbar.

Seit 2013 gibt es auch mehrere Lehmbau-DIN-Normen zur Regelung der Herstellung und Verarbeitung von Lehmbaustoffen. Die positive Marktentwicklung wurde jedoch durch eine Veröffentlichung des Münchner Helmholtzinstituts im Jahre 2012 zur Thoronexhalation von Baustoffen beeinträchtigt. Dabei wurde festgestellt, dass Lehme eine höhere Thoronexhalation aufweisen als andere mineralische Putzarten (Spiegel-Online: Forscher warnen vor Strahlung in Lehmhäusern, 18.04.2012). Thoron wird auch oftmals als Radon ²²⁰Rn bezeichnet. Radon ²²⁰Rn ist ein Zerfallsprodukt des Radium ²²⁴Ra in der Thorium-Reihe. Die Halbwertszeit von Thoron beträgt 55,6 Sekunden. Es zerfällt unter Aussendung von Alphateilchen zu Polonium ²¹⁶Po. Es kann im Hinblick auf die Strahlenbelastung sehr bedeutend sein, da bei gleicher Aktivitätskonzentration wie ²²²Rn aus den ²²⁰Rn Folgeprodukten (vor allem Polonium) eine 14-fach höhere Strahlenbelastung zu beachten ist.

Radon (²²²Rn) und Thoron sind gasförmige Zerfallsprodukte, welche von Lehmputzsystemen emittiert werden. Die Emission von gasförmigen Produkten in Innenräumen von Gebäuden stellt ein Gesundheitsrisiko für Menschen, welche in diesen Gebäuden leben oder arbeiten dar. Im Besonderen wird die Emission von Thoron als problematisch angesehen, da es auf Grund der sehr kurzen Halbwertszeit von 55,6 Sekunden bereits zu einem großen Teil zerfallen ist bevor es durch Lüften entfernt werden kann.

Die Exposition gegenüber Thoron und seinen Zerfallsprodukten in Innenräumen kann zu einer erhöhten Strahlenbelastung von Personen führen, die sich in den Innenräumen aufhalten, was z. B. das Risiko, an Lungenkrebs zu erkranken, relevant erhöhen kann. Daher ist eine möglichst geringe Thoronbelastung der Raumluft erstrebenswert, vorzugsweise geringer als 100 Bq/m³. Dies entspricht einer Thoronexhalation von weniger als 0,1 Becquerel/m² s (0,1 Bq/m² s) der Raumwände und -decken. Demzufolge sind sowohl Hersteller, wie auch Käufer von Lehm-, Kalk- und Zementbaustoffen, sowie deren Mischungen an einer signifikanten Reduzierung der Thoronexhalation interessiert, um einer radioaktiven Belastung von Innenräumen durch Thoronexhalation entgegenzuwirken.

In der Patentschrift NL 2013822 B1 wird ein Farbanstrich auf Polyvinylacetatbasis offenbart, welcher die Thoronexhalation verringern soll. Jedoch werden durch den zusätzlichen Farbanstrich auf Polyvinylacetatbasis die positiven Eigenschaften von Lehmputzen deutlich reduziert. So sinkt die Luftfeuchtigkeitsaufnahme und -abgabe um circa 5 bis 30 %.

KR 2003 0008857 A offenbart einen Wärmedämmziegel, welcher durch Mischen von 50 Gew.-% Gelberde, 20 Gew.-% Aktivkohle, 5 Gew.-% Biotit, 5 Gew.-% Jade, 5 Gew.-% Kalk, 5 Gew.-% Stroh und 5 Gew.-% Sand hergestellt wird, gefolgt von einer Verdichtung.

EP 2 426 096 A1 offenbart einen Trockenmörtel zur Herstellung von Gebäudebauelementen, Wärmespeichern, Wärmetauschern, Spachtelmassen, flächigen Platten oder Belägen wie Putzen, welcher als Zuschlagstoff Naturgraphit, expandiertes Graphit und/oder Ruß enthält.

KR 2002 0026921 A offenbart ein Herstellungsverfahren für wasserfesten Paraffinwachsmörtel, umfassend die Herstellung von ferninfrarot-emittierenden Materialien, die 50-80 Gew.-% Gelberde, 10-50 Gew.-% Holzkohle und 10-30 Gew.-% Quarzporphyr enthalten, und Paraffinwachs enthaltend 50-80 Gew.-% Paraffinwachs, 5-40 Gew.-% Kiefernharz, 5-30 Gew.-% Mikro(kristall)wachs und 5-30 Gew.-% Harz; Mischen von 50-90 Gew.-% (bezogen auf die Menge an Paraffinwachs) der ferninfrarot-emittierenden Materialien mit dem Paraffinwachs, das bei 150-220 °C geschmolzen wird. Der resultierende Paraffinwachsmörtel wird geschmolzen zum Verputzen von Böden von Gebäuden.

CH 701 703 A2 offenbart ein Baustoffgemisch und einen Verputz, welcher Feuchtigkeit aus der Raumluft aufnehmen und abgeben kann und zusätzlich leicht flüchtige organische Verbindungen (VOCs) aus der Raumluft absorbiert und damit aus der Raumluft entfernt.

DE 91 00 684 U1 betrifft einen ökologischen Baustoff mit Anteilen von technisch verkohltem organischem Material.

DE 200 08 006 U1 offenbart eine Putzmörtel auf Lehmbasis unter Verwendung der Bestandteile Feinsande, Mahlton, Bindemittel, und Anmachwasser, dadurch gekennzeichnet, dass als Bindemittel Proteine verwendet werden.

DE 198 00 784 A1 betrifft einen Lehmputz zum Auftrag als Oberflächenbelag im Decken- und/oder Wandbereich von Gebäuden, der als wesentliche Bestandteile Feinsande und Mahltone aufweist und vor der Verarbeitung mit Wasser gemischt wird.

Zhou Qingzhi et al. beschäftigten sich mit der Vorhersage der Effizienz der Radonentfernung für ein Durchfluss-Kohlesystem und den Radon-Abschwächungseigenschaften (Zhou Qingzhi et al.: "Prediction of radon removal efficiency for a flow-through activated charcoal system and radon mitigation characteristics", Radiation measurements, Bd. 119, 2018, S. 112-120).

Iimoto et al. beschäftigten sich mit der Entwicklung eines Verfahrens zur Messung der Radon-Exhalationsrate unter Verwendung eines Aktivkohlekollektors (Iimoto, et al.: "Development of a technique for the measurement of the radon exhalation rate using an activated charcoal collector", Journal of Environmental radioactivity, Bd. 99, Nr. 4, 2008, S. 587 -595).

JP H06 258 443 A offenbart eine Strahlungsmessvorrichtung, um die radioaktiven Elemente in einem Gas effizient zu messen, indem eine adsorptive Substanz in einer Ionisationskammer bereitgestellt wird.

CN107954737 offenbart ein Dekorationsbaumaterial mit Formaldehydreinigungsfunktion, welche aus den folgenden Komponenten in Gewichtsteilen besteht: 1 bis 20 Teile Formaldehydfänger, 100 Teile Substrat, 0,5 bis 1 Teil modifizierter Stärke, 1 bis 1,5 Teile Bindemittel, 0,6 bis 1 Teile Lignocellulose, 0,01 bis 0,1 Teile Treibmittel und 65 bis 75 Teile Wasser.

Vor diesem Hintergrund war es ein Ziel der vorliegenden Erfindung ein Baustoffmaterial bestehend aus eine Lehmbasis bereitzustellen, welches eine deutlich verringerte Thoronexhalation aufweist, wobei die positiven Eigenschaften des Lehms erhalten bleiben.

### Zusammenfassung der Erfindung

Im Rahmen der vorliegenden Erfindung wurde herausgefunden, dass die Thoronexhalation von Lehm deutlich reduziert werden kann, wenn dem Baustoffmaterial umfassend eine Lehmbasis eine Beimischung umfassend mindestens Aktivkohle zugemischt wird, wobei die ausgezeichnete feuchte- und wärmeregulierende Wirkkraft des Lehms erhalten bleibt.

Gemäß einer ersten Ausführungsform stellt die vorliegende Erfindung ein Baustoffmaterial bereit, welches eine Lehmbasis und eine Beimischung umfasst, wobei die Beimischung Aktivkohle umfasst und der Aktivkohleanteil 0,1 bis 10 Gew.%, bezogen auf die Trockenmasse des Baustoffmaterials, beträgt und wobei das Baustoffmaterial eine Trockenmischung ist oder das Baustoffmaterial einen Feuchtigkeitsgehalt von 1 bis 25 Gew.%, bezogen auf das Gesamtgewicht des Baustoffmaterials, aufweist.

Die vorliegende Erfindung stellt ebenso eine Lehmbauplatte und einen Lehmstein, welche aus dem Baustoffmaterial gemäß der ersten Ausführungsform der Erfindung hergestellt sind, bereit. Des Weiteren offenbart die vorliegende Erfindung ein Verfahren zur Herstellung des Baustoffmaterials gemäß der ersten Ausführungsform der Erfindung.

Als eine zweite Ausführungsform stellt die vorliegende Erfindung einen Lehmputz auf der Oberfläche eines Putzuntergrunds umfassend das Baustoffmaterial nach der ersten Ausführungsform der Erfindung bereit.

In einer dritten Ausführungsform ist ein Verfahren zum Aufbringen des Lehmputzmaterials gemäß der ersten Ausführungsform lediglich offenbart, aber nicht als Erfindung beansprucht.

In einer vierten Ausführungsform offenbart die vorliegende Erfindung die Verwendung des Baustoffmaterials gemäß der ersten Ausführungsform zur Absorption von Thoron. Die vorliegende Erfindung offenbart ebenso die Verwendung des Baustoffmaterials gemäß der ersten Ausführungsform zur Reduzierung der Thoronexhalation in Innenräumen und zum Verputzen eines Putzuntergrunds, vorzugsweise von Rauminnenwänden.

Durch die Beimischungen wird die Porengrößenstruktur und -verteilung, die Dichte des Lehmputzes, als auch physikalisch-chemische Eigenschaften beeinflusst, die die Adsorption des Thorons ermöglichen. Versuche haben gezeigt, dass Aktivkohlen sehr effektiv sind.

Ein möglicher Erklärungsversuch hierfür, ohne an diese Theorie gebunden zu sein, könnte sein, dass die natürliche Adsorptions- und Kationenaustauschkapazität der Tonminerale in Kontakt (durch das Einmischen in die Lehmputze) mit der Aktivkohle katalytische Reaktionen erzeugen, die es ermöglichen mit relativ wenig Aktivkohle einen deutlichen adsorbierenden Effekt zu erhalten. In bestimmten Fällen ist es auch sehr hilfreich bestimmte Tonminerale (z. B. komplexe Dreischicht-Tonminerale) mit einzumischen, um den katalytischen Effekt der Aktivkohle noch zu erhöhen.

Durch das Einmischen von Aktivkohle entstehen mikrofeine poröse Kammern, in denen das Thoronatom eingefangen (physikalischer Vorgang) wird. Dieser Effekt kann weiter verstärkt werden durch das Einmischen von weiteren porösen mineralischen und mineralisch biogenen Stoffen, wie Blähton, Zeolithen, Kieselgur oder Kieselalgen, welche als solides Stützgerüst den Lehm durchdringen. Die interaktive Tonmineral/Aktivkohlemischung befindet sich in den Zwischenräumen der soliden Bestandteile des Lehmes, und bilden eine selektive mineralische physikalisch-chemisch aktive Membran, die die Thoronatome zurückhalten, jedoch für Wassermoleküle durchlässig ist, welche hauptsächlich für die positiven Innenraumklimawerte verantwortlich sind. Diese im Putzsystem vorhandenen Wassermoleküle unterstützen auch die Adsorption von Schadstoffen aus der Innenraumluft an den Tonmineralen/Aktivkohle Komplexen und aktivieren die physikalisch-chemisch komplexen Interaktionen zwischen den einzelnen Bestandteilen des Lehmputzes. Voraussetzung für all diese Prozesse ist die intensive Vermischung der verschiedenen Komponenten. Die ganze Putzmasse wirkt in diesem vermischten Zustand wie ein molekulares Sieb.

Durch diese neuen Lehmputzrezepturen werden auch die wichtigsten bauphysikalischen Eigenschaften der Lehmputze beeinflusst. Durch das Beimischen von den zuvor genannten Materialien wird das spezifische Gewicht reduziert und dadurch die wärmedämmende Wirkung der neuen Lehmputzmischungen verbessert. Die Aufnahme und Abgabe von Raumluftfeuchte wird durch die veränderte Dichte und Porengrößenstruktur an der Oberfläche positiv beeinflusst. Auch das Zumischen von dreischichtigen Tonmineralen erhöht die feuchteabsorbierende Kapazität. Die Aufnahme von Schadstoffen und Geruchsstoffen aus der Raumluft wird durch die Tonmineral/Aktivkohle Komplexe auch erhöht.

### Detaillierte Beschreibung

Falls nicht anders angegeben, sind in der vorliegenden Anmeldung bei Prozentangaben Gewichtsprozente (Gew.%) gemeint.

In einer ersten Ausführungsform stellt die vorliegende Erfindung ein Baustoffmaterial umfassend eine Lehmbasis und eine Beimischung bereit, wobei die Beimischung Aktivkohle umfasst.

Unter einem Baustoffmaterial ist ein Material zu verstehen, das zum Errichten von Bauwerken und Gebäuden benutzt werden kann. Ferner umfasst der Begriff auch Materialen die zum Verputzen von Wänden, im Besonderen von Rauminnenwänden, und Decken verwendet werden können.

Die Lehmbasis besteht im Wesentlichen aus Ton, Schluff und gegebenenfalls Sand. Dies bedeutet, dass die Lehmbasis zusätzlich unvermeidliche Verunreinigungen enthalten kann, insbesondere, wenn die Lehmbasis aus einem Rohlehm gewonnen wurde. Vorzugsweise besteht die Lehmbasis zu mindestens 90 Gew.% aus Ton, Schluff und gegebenenfalls Sand, stärker bevorzugt mindestens 95 Gew.%, besonders bevorzugt mindestens 98 Gew.%.

Diese 3 mineralischen Hauptkomponenten der Lehmbasis, können nach ihrer Korngröße eingeteilt werden: Ton (kleiner als 2 µm), Schluffe (2 µm bis 63 µm) und Sande (63 µm bis 2 mm). Bestandteile die größer als 5 mm sind werden in der Regel entfernt. Schluffe und Sande sind meist Füllstoffe aus Quarz und bilden das Stützgerüst der Lehmbasis und sind innert. Der Ton, welcher Tonminerale enthält, ist das natürliche Bindemittel in Lehmputzen allgemein und verklebt die Füllstoffe miteinander, so dass beim Abtrocknen ein festes Gefüge entsteht. Tonminerale haben eine mehrschichtige komplexe chemische Struktur und haben positive und negative Oberflächenspannungen, die in der Summe als Bindekraft im Lehm wirken. Durch die hervorragende Porosität und die komplexen physikalisch-chemischen Eigenschaften der Tonminerale werden die wichtigsten innenraumklimatischen Eigenschaften, wie Luftfeuchteaufnahme und -abgabe positiv beeinflusst.

Die Lehmbasis der vorliegenden Erfindung enthält bevorzugt 5 bis 40 Gew.% Ton und 10 bis 95 Gew.% Schluff, bezogen auf die Trockenmasse der Lehmbasis.

Die Lehmbasis der vorliegenden Erfindung enthält besonders bevorzugt 5 bis 40 Gew.% Ton. 10 bis 50 Gew.% Schluff, und 10 bis 85 Gew.% Sand, bezogen auf die Trockenmasse der Lehmbasis.

Die Lehmbasis kann z. B. durch Mischen von Ton, Schluff und gegebenenfalls Sand erhalten werden. Alternativ kann natürlicher Rohlehm, der im Wesentlichen aus Ton, Schluff und Sand besteht, als Lehmbasis verwendet werden. Rohlehm ist ein Lehm, der in natürlichen Lagerstätten abgebaut werden kann. Bei Bedarf aufbereiteter Rohlehm, d. h., Rohlehm der gesiebt wurde, um eine gewünschte Korngröße zu erhalten, z.B. maximal 5 mm vorzugsweise maximal 2 mm oder feiner, als Lehmbasis verwendet werden.

Ton ist ein natürlich vorkommendes Material, das hauptsächlich aus Tonmineralteilchen besteht, bei ausreichenden Wassergehalten generell plastisch verformbar ist und spröde wird, wenn es getrocknet oder gebrannt wird. Tonminerale enthalten auch Schichtsilikate.

Der Ton kann Kaolinit. Montmorillonit, Illit, Quarz, Eisen-Titan-Minerale, Glimmer und weitere von Glimmer verschiedene Schichtsilikate enthalten. Von Glimmer verschiedene Schichtsilikate sind unter Anderem Attapulgit, Pyrophyllit, Serpentinen, Saponit, Beidellit, Nontronit, Venniculit, Spiolith, oder Gemische davon. Der in der Lehmbasis enthaltene Ton hat eine Korngröße von kleiner 0,002 mm. Vorzugsweise enthält der Ton mehrheitlich Dreischicht-Tonminerale, besonders bevorzugt mindestens 70%, noch stärker bevorzugt mindestens 80 %. am stärksten bevorzugt mindestens 90 % bezogen auf alle Tonminerale in der Lehmbasis.

Unter Schluff versteht man Feinstsand und/oder mineralische Feinbestandteile unterschiedlicher Herkunft, sowie unverfestigte klastische Sedimente, deren mineralische Bestandteile überwiegend (>50 %) eine Korngröße von 0,002 bis 0,063 mm aufweisen.

Sand ist ein natürlich vorkommendes, unverfestigtes Sediment, das sich überwiegend aus Mineralkörnern mit einer Korngröße von 0,063 bis 2 mm zusammensetzt.

Die von innen nach außen gerichtete Diffusionsoffenheit der herkömmlichen Lehmputze ist nach aktueller Erkenntnis der Hauptgrund für die deutlich höheren Thoronexhalation von Lehmputzen. Das Thoron kann relativ schnell und ungehindert an die Oberfläche kommen.

Der Aktivkohleanteil des Baustoffmaterials gemäß der ersten Ausführungsform beträgt 0,1 bis 10 Gew.%, vorzugsweise 0,25 bis 8 Gew.%, besonders bevorzugt 0,5 bis 5 Gew.%, ganz besonders bevorzugt 1 bis 5 Gew.%, bezogen auf die Trockenmasse des Baustoffmaterials. Zur Bestimmung der Trockenmasse des Baustoffmaterials wird die zu untersuchende Probe in einem Wärmeschrank bei 105 °C getrocknet. Die Trockenmasse der Lehmbasis kann entsprechend bestimmt werden.

Durch die Zugabe von Aktivkohle kann die Thoronexhalation deutlich gesenkt werden. Ein möglicher Erklärungsversuch hierfür wird im Folgenden erläutert, ohne an die Theorie gebunden zu sein. Tonminerale, welche im Ton enthalten sind, sind in der Regel mehrschichtig aufgebaut und haben die Eigenschaft bei Wasserzugabe zu quellen und haben an den positiv und negativ geladenen Oberflächen die Fähigkeit elektrisch geladene Teilchen zu binden. Aktivkohlen werden in einem pyrolytischen Erhitzungsprozess hergestellt. Dabei entstehen C-Atome, die bindungsmäßig nur unvollständig gesättigt sind. Diese Situation bewirkt, dass Fremdstoffe an den Oberflächen aktiv festgehalten (adsorbiert) werden. Durch die intensive Vermischung von Tonmineralen und Aktivkohle unter Zugabe von Wasser entstehen komplexe physikalisch chemische Wirkmechanismen, die eine katalytische Bindungskraft haben in Bezug auf die Thoronadsorption. Deswegen ist das erfindungsgemäße Baustoffmaterial in der Lage mit relativ geringen Mengen an Aktivkohlebeimischung deutliche thoronadsorbierende Effekte zu erzielen. Es entsteht eine Aktivkohle-Tonmineral-Suspension die sich zwischen die Tonmineralschichten einlagern kann und eine sehr dynamische Hülle um die Tonminerale bildet. Da das meiste Thoron in den Tonmineralen entsteht, wird dort wo der Entstehungsprozess stattfindet diese biokristalline mineralische Molekularsiebmembran auch im getrockneten Zustand sofort aktiv.

Es ist bevorzugt, dass die Lehmbasis zu 30 bis 99,9 Gew.%, vorzugsweise 50 bis 99.5 Gew.%, besonders bevorzugt 70 bis 99 Gew.%, ganz besonders bevorzugt 90 bis 99 Gew.%, bezogen auf die Trockenmasse des Baustoffmaterials, in dem Baustoffmaterial gemäß der ersten Ausführungsform enthalten ist.

Die Aktivkohle hat absorbierende, wärmedämmende, Elektrosmog abschirmende, blockierende (trapping) Eigenschaften und nimmt bzw. gibt Luftfeuchtigkeit auf bzw. ab. Weiterhin ist es bevorzugt, dass die Aktivkohle aus Torf, Bambus, Kokosnussschalen oder Steinkohle hergestellt ist.

Aktivkohle adsorbiert meistens eher kleinere Moleküle. Die Jodzahl ist ein entscheidender Parameter für die Adsorptionsleistung einer Aktivkohle. Dabei wird die Aktivierung der Aktivkohle gemessen. Oft wird die Adsorptionsleistung in mg/g angegeben. Die Jodzahl ist definiert als die Anzahl Milligramm Jod, die von einem Gramm Aktivkohle adsorbiert wird.

In der vorliegenden Erfindung ist es bevorzugt, dass die verwendete Aktivkohle eine Jodzahl von 800 bis 1200 mg/g, bevorzugt von 900 bis 1150 mg/g, besonders bevorzugt von 950 bis 1100 mg/g.

Außerdem ist es bevorzugt, dass die Aktivkohle eine möglichst große Oberfläche hat, die Aktivkohle sollte daher vorzugsweise eine BET-Oberfläche von 300 bis 3000 g/m², bevorzugt 500 bis 2000 g/m², besonders bevorzugt 700 bis 1500 g/m² aufweisen.

Die BET-Oberflächenmessung ist ein Analyseverfahren zur Größenbestimmung von Oberflächen, insbesondere poröser Festkörper, mittels Gasadsorption. Hierbei handelt es sich um eine Methode der Oberflächenchemie, mit welcher die massenbezogene spezifische Oberfläche aus experimentellen Daten errechnet wird. "BET" steht dabei für die Nachnamen der Entwickler des BET-Modells, Stephen Brunauer, Paul Hugh Emmett und Edward Teller.

Die Messmethode wird in der Norm DIN ISO 9277 beschrieben. Ein Gas (Adsorptiv), häufig Stickstoff, wird über das zu untersuchende Material (Adsorbens) geleitet. Aufgrund von Kühlung, meist durch flüssigen Stickstoff (-196 °C), kann man mit einem Normaldruckmessgerät unterhalb des Sättigungsdampfdruckes des Messgases die adsorbierte Menge bestimmen (Adsorption). Kondensation würde das Messergebnis verfälschen, findet aber nicht statt, solange der Sättigungsdampfdruck nicht erreicht wird. Anschließende Verringerung des Drucks innerhalb der Apparatur löst einen Teil der adsorbierten Gasmenge von der Oberfläche (Desorption). Dadurch kann eine Adsorptions-Desorptions-Isotherme ermittelt werden.

Es ist ferner bevorzugt, dass die Aktivkohle eine Kornverteilung aufweist, bei der mindestens 60 Massenprozent der Aktivkohle einen Partikeldurchmesser von kleiner 100 µm haben, und vorzugsweise mindestens 85 Massenprozent einen Partikeldurchmesser von kleiner 100 µm haben.

Weiterhin ist es bevorzugt, dass die Beimischung weiter Holzkohle und/oder Biokohle umfasst. Zudem ist es bevorzugt, dass die Gesamtmenge an Aktivkohle, Holzkohle und Biokohle 0,1 bis 30 Gew.%, vorzugsweise 0,25 bis 20 Gew.%, besonders bevorzugt 0,5 bis 15 Gew.%, ganz besonders bevorzugt 1 bis 10 Gew.%, bezogen auf die Trockenmasse des Baustoffmaterials, beträgt.

Bei Biokohle, welche oftmals auch als Pflanzenkohle bezeichnet wird, handelt es sich um ein poröses, aus biologischen Reststoffen hergestelltes Material. Biokohle wird durch pyrolytische Verkohlung rein pflanzlicher Ausgangsstoffe wie zum Beispiel Holzresten, Mist oder Schlachtabfällen, hergestellt. Bei der pyrolytische Verkohlung werden die biologischen Stoffe ohne Zusatz von Sauerstoff, auf Temperaturen zwischen 400 und 800 °C in einem Reaktor erhitzt. Während des Brennens bildet sich ein Material mit unzähligen Mikroporen, in denen sich große Luftmengen ablagern. Biokohle hat absorbierende, wärmedämmende, Elektrosmog abschirmende, blockierende (trapping) Eigenschaften.

Holzkohle hingegen entsteht bei der Pyrolyse von lufttrockenem Holz (auf 13 % bis 18 % Wasser getrocknet). Dabei wird das lufttrockene Holz auf 275 °C unter Luftabschluss und ohne Sauerstoffzufuhr erhitzt. Die Temperatur steigt dabei von selbst auf 350 °C bis 800 °C an (Holzverkohlung). Hierbei verbrennen die leichtflüchtigen Bestandteile des Holzes. Als Rückstand erhält man neben gasförmigen Zersetzungsprodukten (unter Anderem Kohlenmonoxid, Methan, Formaldehyd, Essig- und Ameisensäure, Methanol und Wasserstoff) etwa 35 % Holzkohle bezogen auf die ursprüngliche Masse des lufttrockenen Holzes.

Ferner ist es bevorzugt, dass die Beimischung weiter Zuschlagstoffe ausgewählt aus der Gruppe bestehend aus porösen Materialien, Tonmineralen, Füllstoffen, organischen Materialien und Mischungen davon umfasst.

Es ist bevorzugt, dass die organischen Materialien ausgewählt sind aus der Gruppe bestehend aus Methylcellulose, Cellulosefasern, Stärke, Stroh, Hanffasern, Flachsfasern, Pflanzenfasern und dergleichen, sowie Mischungen davon.

Methylcellulose eignet sich besonders gut um die Bindekraft zu erhöhen.

Es ist weiter bevorzugt, dass die porösen Materialien ausgewählt sind aus der Gruppe bestehend aus Blähtongranulat, Zeolithe, Algenkalk, Kalkgries, Perlitgranulat, Kieselgur, Blähgesteine, Blähglas und Mischungen davon.

Blähtongranulat sind kleine lufthaltige Kugeln aus gebranntem Ton. Als Rohstoff wird kalkarmer Ton mit fein verteilten organischen Bestandteilen verwendet. Dieser wird gemahlen, granuliert und ohne weitere Zusätze bei rund 1200 °C gebrannt. Als Trennmittel dient feinst gemahlener Kalkstein. Dabei verbrennen die organischen Zuschlagsstoffe in den Kügelchen und das Material bläht sich durch das bei der Verbrennung entstehende Kohlendioxid kugelförmig auf. Blähton erreicht dabei ein Mehrfaches des Ausgangsvolumens. Der Kern ist geschlossenporig, die Oberfläche gesintert. Blähtongranulat hat wärmedämmende und blockierende (trapping) Eigenschaften, und kann ein Stützgerüst im fertigen Baustoff bilden.

Es ist besonders bevorzugt, dass das Blähtongranulat eine Partikelgröße von maximal 5 mm, vorzugsweise von maximal 2 mm, aufweist.

Zeolithe sind kristalline Alumosilikate, die in zahlreichen Modifikationen in der Natur vorkommen, aber auch synthetisch hergestellt werden können. Die Art der Zeolithe die in der vorliegenden Erfindung verwendet werden könne ist nicht begrenzt. Jegliche dem Fachmann bekannt Art kann verwendet werden. Zeolithe haben absorbierende, blockierende (trapping) Eigenschaften und geben Luftfeuchtigkeit auf bzw. ab.

Algenkalk wird aus Ablagerungen von Rotalgen hergestellt, enthält ca. 70 bis 80% Calciumcarbonat, ca. 6 bis 10 % Magnesiumcarbonat, ca. 3 bis 4 % Kieselsäure sowie eine Vielzahl von Spurenelementen, wie unter anderem Bor und lod.

Kalkgries wird durch Zerkleinerung aus natürlichem Kalkstein gewonnen. Die Korngröße beträgt 0,1 bis 1,2 mm.

Perlit bezeichnet ein alteriertes (chemisch und physikalisch umgewandeltes) vulkanisches Glas (Obsidian) und zählt damit zu den Gesteinen. Er wird in der Regel thermisch expandiert und zu vielen Zwecken, etwa im Baugewerbe, als Rohstoff eingesetzt.

Unter Kieselgur versteht man eine weißliche, putverförmige Substanz, die hauptsächlich aus den Schalen fossiler Kieselalgen (Diatomeen) besteht. Die Schalen bestehen zum größten Teil aus amorphem (nicht-kristallinem) Siliziumdioxid (SiO₂) und weisen eine sehr poröse Struktur auf.

Algenkalk, Kalkgries, Perlit, sowie Kieselgur haben blockierende (trapping) Eigenschaften. Perlit besitzt zusätzlich noch eine wärmedämmende Wirkung.

Als Blähgestein können für die vorliegende Erfindung jegliche Art von Blähgestein verwendet werden, welche dem Fachmann bekannt sind. Als Ausgangsmaterial können unter Anderem Vermiculit oder Perlit verwendet werden. Die Partikelgröße des Blähgesteins ist nicht begrenzt, jedoch bevorzugt in einem Bereich von 0,001 bis 2 mm.

Bei Blähglas handelt es sich um aufgeschäumtes Glas mit kleinen, gasgefüllten Poren, welches aus Altglas hergestellt werden kann. Die Partikelgröße von Blähglas ist bei der vorliegenden Erfindung nicht limitiert, bevorzugt ist jedoch die Partikelgröße in einem Bereich von 0 bis 1500 µm.

Zudem ist es bevorzugt, dass die Tonminerale ausgewählt sind aus der Gruppe bestehend aus Dreischichttonmineralen (z.B. Bentoniten, Illit, Montmorillonit, Smektit, Vermiculit), aktivierten Tonmineralen, modifizierten Tonmineralen und Mischungen davon.

Die Partikelgröße von Bentoniten, Illit, Montmorillonit, Smektit, Vermiculit, aktivierten Tonmineralen, sowie modifizierten Tonmineralen ist nicht begrenzt, sie ist jedoch bevorzugt in einem Bereich von 0 bis 200 µm.

Alle oben genannten Tonminerale besitzen absorbierende Eigenschaften, erhöhen die Bindekraft und fördern die Luftfeuchtigkeitsaufnahme bzw. -abgabe.

Unter dem Begriff aktivierte Tonminerale ist ein Tonmineral zu verstehen, welches biologisch, physikalisch, chemisch und/oder thermisch aktiviert wird. Die Aktivierung kann beispielsweise durch Säuren, alkalisch oder mit organischen Kationen durchgeführt werden. Aktivierte Tonminerale werden auch als modifizierte Tonminerale bezeichnet.

Weiterhin ist es bevorzugt, dass die Füllstoffe ausgewählt sind aus der Gruppe bestehend aus Sand, Kreide, Marmormehlen, Glimmer, Schaumglas, Mikroglaskugeln, Diabas, Gesteinsmehlen, Glashohlkugeln, Glasmehlen, Trassmehlen, Kalkmehlen, EM-Pulver und Mischungen davon.

Es ist bevorzugt, dass der Sand Quarzsand mit einer Partikelgröße von 0,063 bis 2 mm ist.

EM Pulver ist hauptsächlich Quarzmehl und trägt die Information von effektiven Mikroorganismen in sich. (Homöopathisches Konzept). Dazu werden über einen langen Zeitraum effektive Mikroorganismen fermentiert und so die Informationen der effektiven Mikroorganismen übertragen. Durch den Brennprozess werden diese Informationen der Ausgangsstoffe in dem EM Pulver gespeichert.

Der Begriff Kreide ist vor dem Hintergrund der vorliegenden Erfindung nicht begrenzt. Beispielsweise kann Oberkreide, welche aus sehr feinkörnigen, meist weiße oder hellgraue Kalksteinen besteht, oder Schreibkreide, welche eine sehr weiche und hochporöse Variante dieser Kalksteine ist, verwendet werden. Die Partikelgröße der Kreide ist nicht begrenzt, ist bevorzugt aber in einem Bereich von 0 bis 5 µm, vorzugsweise 0,3 bis 3 µm.

Marmormehl besteht aus Calciumcarbonat und hat eine Partikelgröße von 0 bis 50 µm, vorzugsweise 3 bis 30 µm.

Kreide, Marmormehl, Diabas und Gesteinsmehl eignen sich besonders gut um grobe Poren zu füllen. Schaumglas und Mikroglaskugeln haben eine wärmedämmende Wirkung.

Als Glimmer bezeichnet man eine Gruppe von Mineralen aus der Abteilung der Schichtsilikate mit gleichem atomaren Aufbau.

Es ist weiter bevorzugt, dass die Beimischung eine Partikelgröße von maximal 2 mm aufweist.

Das Baustoffmaterial ist eine Trockenmischung oder weist einen Feuchtigkeitsgehalt von 1 bis 25 Gew.%, bevorzugt von 1 bis 7 Gew.%, besonders bevorzugt von 3 bis 7 Gew.%, bezogen auf das Gesamtgewicht des Baustoffmaterials, auf. Das verkaufsfertige Produkt kann als Trockenmischung oder erdfeucht bereitgestellt werden. Die Trockenmischung hat einen Feuchtigkeitsgehalt von weniger als 3 Gew.% bezogen das Gesamtgewicht des Baustoffmaterials. Die erdfeuchte Mischung hat einen Feuchtigkeitsgehalt von 3 bis 10 Gew.%, vorzugsweise 3 bis 7 Gew.%, bezogen das Gesamtgewicht des Baustoffmaterials.

Vor der Verarbeitung wird üblicherweise zu der Trockenmischung oder der erdfeuchten Mischung des Baustoffinaterials Wasser zugegeben, um eine Nassmischung zu erhalten, welche einen Feuchtigkeitsgehalt von 10 bis 25 Gew.% bezogen auf das Gesamtgewicht des Baustoftmaterials aufweist. Zur Bestimmung des Feuchtigkeitsgehalts (Wassergehalts) wird die zu untersuchende Probe des Baustoffmaterials in einem Wärmeschrank bei 105 °C getrocknet. Durch Wägung vor und nach dieser Trocknung lässt sich der Feuchtigkeitsgehalt bestimmen.

Da das verkaufsfertige Produkt als Trockenmischung oder erdfeucht bereitgestellt wird, ist es auf Grund des geringeren Feuchtigkeitsgehalts leichter und es können somit die Transportkosten verringert werden.

Ebenso bevorzugt ist es, dass das Baustoffmaterial ein Lehmputzmaterial ist. Weiterhin ist es bevorzugt, dass das Baustoffmaterial gemäß der ersten Ausführungsform der Erfindung als mindestens eine Schicht auf mindestens eine Oberfläche eines Putzuntergrunds aufgetragen ist. Darüber hinaus ist es bevorzugt, dass sich das Baustoffmaterial gemäß der ersten Ausführungsform der Erfindung auf mindestens einer Oberfläche eines Putzuntergrunds befindet.

Als Putzuntergrund gemäß der vorliegenden Erfindung wird jegliches Material verstanden, welches sich zum Verputzen eignet. Der Putzuntergrund ist bei der vorliegenden Erfindung nicht beschränkt, beispielsweise kann der Putzuntergrund eine Lehmwand, Gipskartonplatte (z.B. Rigips®), Gipsfaserplatte (z.B. Fermacell®), Lehmbauplatte, Lehmstein, Porenbeton, Porenziegel (z.B. Poroton®), Kalksandstein, Ziegel oder Beton sein. Es ist weiter bevorzugt, dass der Putzuntergrund ein Fertigbauteil, eine Rauminnenwand, die Innenseite einer Raumaußenwand oder die Decke eines Innenraums ist.

Das Baustoffmaterial gemäß der ersten Ausführungsform der Erfindung kann durch ein Verfahren hergestellt werden, bei welchem die Lehmbasis mit der Aktivkohle gemischt wird.

Vorzugsweise können der Ton, Schluff und gegebenenfalls Sand gemischt werden um eine Lehmbasis zu erhalten. Alternativ kann natürlicher Rohlehm, der im Wesentlichen aus Ton, Schluff und Sand besteht, als Lehmbasis verwendet werden. Rohlehm ist ein Lehm, der in natürlichen Lagerstätten abgebaut werden kann. Bei Bedarf kann der Rohlehm aufbereitet werden um die Lehmbasis zu erhalten. Bei der Aufbereitung des Rohlehms wird der Rohlehm gesiebt um eine gewünschte Korngröße zu erhalten, z.B. maximal 5 mm vorzugsweise maximal 2 mm oder feiner.

Anschließend kann die Aktivkohle zu der Lehmbasis zugemischt werden.

Das Baustoffmaterial gemäß der ersten Ausführungsform der Erfindung kann weiter, wenn die Beimischung zusätzlich zur Aktivkohle weitere Komponenten enthält, durch ein Verfahren hergestellt werden, welches die folgenden Schritte umfasst:
Mischen der Beimischungsstoffe einschließlich der Aktivkohle, und
Mischen der Lehmbasis mit den gemischten Beimischungsstoffen.

Zum Mischen der Komponenten der Lehmbasis und des Baustoffmaterials kann z.B. ein handelsüblicher Zwangsmischer verwendet werden.

Zudem stellt die vorliegende Erfindung eine Lehmbauplatte, welche aus dem Baustoffmaterial gemäß der ersten Ausführungsform der Erfindung hergestellt ist und einen Lehmstein, welcher aus dem Baustoffmaterial gemäß einem der ersten Ausführungsform der Erfindung hergestellt ist, bereit.

Als eine zweite Ausführungsform stellt die vorliegende Erfindung einen Lehmputz auf mindestens einer Oberfläche eines Putzuntergrunds umfassend das Baustoffmaterial nach der ersten Ausführungsform der Erfindung bereit.

Es ist bevorzugt, dass der Lehmputz mehrere Schichten umfasst. Wenn der Lehmputz mehrere Schichten umfasst, dann umfasst mindestens eine Schicht das Baustoffmaterial gemäß der ersten Ausführungsform.

Es ist weiter bevorzugt, dass der Lehmputz in dieser Reihenfolge ausgehend von der Oberfläche des Putzuntergrunds eine Lehmunterputzschicht, und eine Lehmoberputzschicht auf der Lehmunterputzschicht umfasst, wobei mindestens eine der beiden Schichten Aktivkohle enthält.

Lehmunterputz ist eine Lehm enthaltende Schicht. Durch den Lehmunterputz können Unebenheiten des Putzuntergrundes ausgeglichen werden. Die Lehmbasis des Lehmunterputzes der vorliegenden Erfindung ist nicht beschränkt. Es kann eine handelsübliche Lehmbasis verwendet werden.

Lehmoberputz ist eine Lehm enthaltende Schicht. Durch den Lehmoberputz kann üblicherweise eine glatte Oberfläche bereitgestellt werden. Die Lehmbasis des Lehmoberputzes der vorliegenden Erfindung ist nicht beschränkt. Es kann eine handelsübliche Lehmbasis verwendet werden.

Der Putzuntergrund der vorliegenden Erfindung ist nicht beschränkt und es kann ein Putzuntergrund wie oben definiert verwendet werden.

Es ist weiter bevorzugt, wenn die Thoronexhalation der Lehmbasis des Lehmputzes mehr als 0,10 Bq/m²s, insbesondere mehr als 1.00 Bq/m²s, beträgt, dass die Lehmunterputzschicht Aktivkohle enthält. Wenn in der vorliegenden Anmeldung von der Thoronexhalation der Lehmbasis gesprochen wird, ist die Thoronexhalation der Lehmbasis des Lehmputzes ohne Beimischungen gemeint.

Wenn der Lehmunterputz zusätzlich Aktivkohle enthält, kann die Thoronexhalation des Lehmputz gegenüber der Lehmbasis noch weiter verringert werden. Dies ist besonders von Vorteil, wenn die Lehmbasis eine hohe Thoronexhalation aufweist.

Es ist weiter bevorzugt, dass die Lehmoberputzschicht des Lehmputzes gemäß der zweiten Ausführungsform Aktivkohle enthält.

Es ist zudem bevorzugt, dass die Lehmunterputzschicht des Lehmputzes gemäß der zweiten Ausführungsform eine Dicke im Bereich von 2 bis 20 mm, bevorzugt von 3 bis 10 mm aufweist.

Weiter ist es bevorzugt, dass die Lehmoberputzschicht des Lehmputzes gemäß der zweiten Ausführungsform eine Dicke im Bereich von 2 bis 10 mm, bevorzugt von 3 bis 5 mm aufweist.

Der Lehmunterputz gemäß der zweiten Ausführungsform der Erfindung ist vorzugsweise ein Kontaktlehm umfassend Tonminerale, Sand, Schluff und Cellulose. Als Cellulose kann z.B. Methylzellulose oder Cellulosefasern verwendet werden. Es ist besonders bevorzugt, dass der Kontaktlehm bei Gipskarton (Rigips), sowie Gipsfaserplatten verwendet wird. Hierbei dient der Kontaktlehm als eine Art Haftschicht, wodurch die Haftung der weiteren Schichten auf dem Putzuntergrund bzw. Kontaktlehm deutlich verbessert werden können. Die Tonminerale, sowie die Cellulose gehen hierbei eine Bindung ein, wodurch die Haftung verbessert werden kann.

Es ist zudem bevorzugt, dass die Lehmunterputzschicht ein, zwei oder mehrere Dreischicht-Tonminerale umfasst, weil diese im Allgemeinen eine geringere Thoronexhalation aufweisen. Insbesondere ist bevorzugt, dass der Tonanteil der Lehmunterputzschicht mehrheitlich Dreischicht-Tonminerale umfasst, besonders bevorzugt mindestens 70 %, noch stärker bevorzugt mindestens 80 %, am stärksten bevorzugt mindestens 90 % bezogen auf alle Tonminerale in der Lehmunterputzschicht.

Tonminerale im Allgemeinen bestehen aus zwei charakteristischen Bauelementen. Zum einen aus einer Tetraederschicht, welche aus eckenverknüpften SiO₄-Tetraedern besteht. Zum Teil werden die Si-Atome durch Al-Atome substituiert. Zum anderen aus einer Oktaederschicht, welche aus kantenverknüpften Al(OH)₆-Oktaedern besteht. Zum Teil sind die Al-Atome durch Mg-Atome substituiert.

Die Dreischicht-Tonminerale bestehen aus einem Tetraederschicht-Oktaederschicht-Tetraederschicht (TOT)-Aufbau. Zu den Dreischicht-Tonmineralen zählen unter anderem Illit, Montmorillonit, Smektit oder Vermiculit. Bentonit ist eine Mischung aus verschiedenen Tonmineralien und enthält als wichtigsten Bestandteil Montmorillonit (60 % bis 80 %).

Es ist weiter bevorzugt, dass die Lehmunterputzschicht ein Lehmfeinputz ist. Lehmfeinputz ist ein Putz der Sand mit einer Korngröße von maximal 2 mm, bevorzugt von maximal 1 mm, enthält.

Es ist auch bevorzugt, dass die Lchmunterputzschicht ein Lehmgrobputz ist. Lehmgrobputz ist ein Putz, der Sand mit einer Korngröße bis zu 5 mm enthält, wobei der Sand Körner mit einer Korngröße von mehr als 2 mm bis 5 mm umfasst.

Es ist weiter bevorzugt, dass die Lehmoberputzschicht des Lehmputzes gemäß der zweiten Ausführungsform ein Lehmfeinputz ist.

Es ist zudem bevorzugt, dass die Lehmunterputzschicht des Lehmputzes gemäß der zweiten Ausführungsform der Erfindung ein Gewebe enthält. Dieses wird in die Lehmunterputzschicht in nassem, feuchtem Zustand eingearbeitet. Das Gewebe ist dabei vorzugsweise ausgewählt aus Glasgittergewebe, Jutegewebe und Flachsgewebe. Durch das eingearbeitete Gewebe in die Lehmunterputzschicht kann eine rissfreie Oberfläche erzeugt werden. Das Gewebe wird hauptsächlich auf Plattensystemen und auf wechselnden Putzuntergründen eingesetzt.

Einige Putzuntergründe geben selbst Thoron ab, z.B. Putzuntergründe, die selbst Lehm umfassen (z.B. Lehmbauplatten oder Lehmsteine), oder leicht gebrannte Ziegel, Schlackesteine, Pozzolana, Peperino, Lavasteine, Tuffstein. Bei Putzuntergründen, die selbst Thoron abgeben, ist es bevorzugt, dass der Lehmputz eine Zwischenschicht umfasst, wobei sich die Zwischenschicht zwischen Lehmunterputzschicht und Putzuntergrund befindet und Aktivkohle enthält. Es ist weiter bevorzugt, dass die Zwischenschicht eine Dicke von 3 bis 10 mm, bevorzugt von 2 bis 5 mm aufweist. Die Zwischenschicht umfasst vorzugsweise keinen Lehm. Es ist weiter bevorzugt, dass die Zwischenschicht eine mineralische Membran ist und ferner Biokohle, Blähglas, Blähgestein, Kreide und/oder Cellulose umfasst. Die mineralische Membran umfasst die genannten Zuschlagsstoffe, als auch einen Aktivkohleanteil bis 20 %, aber keine Tonminerale. Durch die Zwischenschicht kann die Thoronexhalation ausgehend von dem Putzuntergrund, welcher z.B. Lehm umfasst, reduziert werden.

Es ist ferner bevorzugt, dass der Lehmputz gemäß der zweiten Ausführungsform der Erfindung eine Lehmoberfarbe als oberste Schicht umfasst. Die Lehmoberfarbe weist vorzugsweise eine Dicke im Bereich von 0,05 bis 1,0 mm, besonders bevorzugt von 0,1 bis 0,5 mm, auf.

Die Lehmoberfarbe ist vorzugsweise eine Tonmineral und Schluff enthaltende Schicht, welche Pigmente enthalten kann. Vorzugsweise enthält die Lehmoberfarbe dreischichtige Tonminerale. Als Pigmente können z.B. Erdpigmente, organische Pigmente oder Farboxide verwendet werden, z.B. Titandioxid, Eisenoxid, Ultramarin, Chromoxid.

Die Lehmoberfarbe der vorliegenden Erfindung ist nicht beschränkt. Es kann eine handelsübliche Lehmoberfarbe verwendet werden.

Zudem ist es bevorzugt, dass der Lehmputz gemäß der zweiten Ausführungsform, eine Lehmfarbengrundierung direkt unterhalb der Lehmoberfarbe umfasst. Die Lehmfarbengrundierung ist eine Lehm enthaltende Schicht, die vorzugsweise keine zweischichtigen Tonminerale umfasst. Die Lehmfarbengrundierung weist vorzugsweise eine Dicke im Bereich von 0.05 bis 1,0 mm, besonders bevorzugt von 0,1 bis 0,5 mm, auf.

Es ist weiter bevorzugt, dass die Lehmfarbengrundierung mindestens einen mineralischen Zuschlagstoff ausgewählt aus der Gruppe bestehend aus Perlit, Blähglas, Glasholkugeln und Ähnlichen umfasst. Es ist weiter bevorzugt, dass die mineralischen Zuschlagstoffe in einer Menge von bis zu 70 Gew.%, besonders bevorzugt bis zu 50 Gew.%, enthalten sind. Es ist weiter bevorzugt, dass das vorgehend genannte Perlit eine Schüttdichte im Bereich von 90 bis 150 kg/m³aufweist. Zudem ist es bevorzugt, dass das Blähglas einen Partikeldurchmesser von 0,04 bis 0,125 mm aufweist. Außerdem ist es bevorzugt, dass die Glashohlkugeln einen mittleren Teilchendurchmesser von 55 µm besitzen.

Die Auftragung der Lehmfarbengrundierung mit den oben genannten Zuschlagstoffen hat eine wärmedämmende Wirkung, wodurch Energie eingespart werden kann und somit die Heizkosten gesenkt werden können.

Die Lehmfarbengrundierung kann Aktivkohle umfassen. Durch die Lehmfarbengrundierung, welche Aktivkohle umfasst, kann die Menge an Aktivkohle im Lehmunter- und Lehmoberputz verringert werden. Dadurch können die Gesamtkosten verringert werden. Zudem kann die Lehmfarbengrundierung, welche Aktivkohle umfasst, auf bereits bestehende Lehm enthaltende Wände, z. B. mit Lehm verputzte Wände, aufgetragen werden, um die Thoronexhalation zu reduzieren.

Die Lehmfarbengrundierung der vorliegenden Erfindung ist nicht beschränkt. Es kann eine handelsübliche Lehmfarbengrundierung verwendet werden.

Es ist zudem bevorzugt, dass der Putzuntergrund des Lehmputzes gemäß der zweiten Ausführungsform ein Putzuntergrund ist, der mit einem Spritzbewurf oder Tiefengrund vorbehandelt ist.

Wenn der Putzuntergrund vorbehandelt ist, wird in der vorliegenden Anmeldung die Vorbehandlung dem Putzuntergrund zugerechnet und ist nicht Teil des Lehmputzes.

Der Spritzbewurf enthält vorzugsweise Zement, Sand und gegebenenfalls Kalk. Der Spritzbewurf wird vorzugsweise bei einem Putzuntergrund ausgewählt aus Porenbeton, porosierten Mauerziegeln. Kalksandstein und einer Ziegelwand, verwendet. Spritzbewurf erzeugt eine raue Oberfläche, welche die Haftung erhöht.

Der Tiefengrund enthält vorzugsweise Acrylharz und/oder Dispersionen. Der Tiefengrund wird vorzugsweise bei einem Putzuntergrund aus Gipskarton oder Gipsfaserplatten verwendet. Das Acrylharz und/oder die Dispersionen wirken hier als Haftvermittler.

Es ist bevorzugt, dass der Lehmputz gemäß der zweiten Ausführungsform der Erfindung, sich auf der Oberfläche des Putzuntergrunds befindet, welcher gegebenenfalls mit einem Spritzbewurf oder Tiefengrund vorbehandelt ist, und der Lehmputz in dieser Reihenfolge ausgehend von der Oberfläche des Putzuntergrunds eine Lehmunterputzschicht, eine Lehmoberputzschicht auf der Lehmunterputzschicht, gegebenenfalls eine Lehmfarbengrundierung auf der Lehmoberputzschicht, und gegebenenfalls eine Lehmoberfarbe als oberste Schicht umfasst.
wobei mindestens eine Schicht ausgewählt aus der Lehmunterputzschicht, der Lehmoberputzschicht und der Lehmfarbengrundierung Aktivkohle enthält, und gegebenenfalls, falls der Putzuntergrund Lehm umfasst, eine Zwischenschicht umfasst, welche sich zwischen Lehmunterputzschicht und Putzuntergrund befindet und wobei die Zwischenschicht Aktivkohle umfasst. Das bedeutet, für den Fall, dass sowohl eine Lehmunterputzschicht, eine Lehmoberputzschicht und eine Lehmfarbengrundierung in dem Lehmputz vorhanden ist, mindestens eine dieser drei Schichten Aktivkohle enthält. Für den Fall, dass der Lehmputz eine Lehmunterputzschicht, eine Lehmoberputzschicht aber keine Lehmfarbengrundierung umfasst, soll mindestens eine Schicht ausgewählt aus der Lehmunterputzschicht und der Lehmoberputzschicht Aktivkohle enthalten.

Es ist ferner bevorzugt, dass der Lehmputz gemäß der zweiten Ausführungsform in dieser Reihenfolge ausgehend von der Oberfläche des Putzuntergrunds eine Lehmunterputzschicht, eine Lehmoberputzschicht auf der Lehmunterputzschicht, eine Lehmfarbengrundierung auf der Lehmoberputzschicht, und eine Lehmoberfarbe auf der Lehmfarbengrundierung umfasst.

Es ist weiter bevorzugt, dass die Lehmunterputzschicht eine Dicke im Bereich von 2 bis 20 mm, bevorzugt im Bereich von 3 bis 10 mm, die Lehmoberputzschicht eine Dicke im Bereich von 2 bis 10 mm, bevorzugt im Bereich von 3 bis 5 mm, die Lehmfarbengrundierung eine Dicke im Bereich von 0,05 bis 1,0 mm, bevorzugt im Bereich von 0,1 bis 0,5 mm, und die Lehmoberfarbe eine Dicke im Bereich von 0,05 bis 1,0 mm, bevorzugt im Bereich von 0,1 bis 0,5 mm in dem Lehmputz gemäß der zweiten Ausführungsform aufweist.

Wenn die Thoronexhalation der Lehmbasis des Lehmputzes gemäß der zweiten Ausführungsform weniger als 0.20 Bq/m²s, vorzugsweise weniger als 0,10 Bq/m²s, beträgt, ist es bevorzugt, dass die Lehmoberputzschicht weiter Kieselgur und/oder Kalkgrieß umfasst.

Wenn die Thoronexhalation der Lehmbasis des Lehmputzes gemäß der zweiten Ausführungsform 0.11 bis 1.00 Bq/m²s beträgt, ist es bevorzugt, das die Lehmoberputzschicht weiter Algenkalk und/oder Kalkgrieß umfasst, die Lehmfarbengrundierung Schicht weiter Gesteinsmehl, Blähgestein, Zeolithe, Aktivkohle und/oder Cellulose umfasst, und die Lehmoberfarbe Schicht weiter Marmormehl, Blähgestein und/oder Cellulose umfasst.

Wenn die Thoronexhalation der Lehmbasis des Lehmputzes gemäß der zweiten Ausführungsform mehr als 1,01 Bq/m²s beträgt, ist es bevorzugt, dass die Lehmunterputzschicht weiter Biokohle umfasst, die Lehmoberputzschicht weiter Algenkalk und/oder Kalkgrieß umfasst, die Lehmfarbengrundierung weiter Gesteinsmehl, Blähgestein, Zeolithe, Aktivkohle und/oder Cellulose umfasst, und die Lehmoberfarbe weiter Marmormehl, Blähgestein und/oder Cellulose umfasst.

Bei den drei oben genannten Werten der Thoronexhalation der Lehmbasis, bezieht sich die Thoronexhalation auf die Lehmbasis ohne Beimischungen.

Darüber hinaus ist es bevorzugt, dass der Lehmputz gemäß der zweiten Ausführungsform, eine Thoronexhalation von 0,2 Bq/m²s oder weniger, vorzugsweise von 0,1 Bq/m²s oder weniger aufweist. Die Thoronexhalation bezieht sich hierbei auf den erfindungsgemäßen fertigen Lehmputz, welcher die Beimischungen enthält.

In einer dritten Ausführungsform ist ein Verfahren zum
Aufbringen des Lehmputzmaterials gemäß der ersten Ausführungsfonn auf einen Putzuntergrund, wobei das Lehmputzmaterial auf einen Putzuntergrund aufgebracht wird, lediglich offenbart, aber nicht als Erfindung beansprucht.

Wenn das Lehmputzmaterial als Trockenmischung oder erdfeucht bereitgestellt wird, wird das Lehmputzmaterial vor dem Auftragen mit Wasser gemischt, bis ein Feuchtigkeitsgehalt von 10 bis 25 Gew.% erreicht ist.

Wenn der Lehmputz mehrere Schichten umfasst, kann die jeweils vorherige Schicht gegebenenfalls getrocknet werden vor dem Auftragen der nächsten Schicht.

Es weiter bevorzugt, dass das Verfahren einen Schritt des Auftragens einer Lehmunterputzschicht, und einen Schritt des Auftragens einer Lehmoberputzschicht umfasst, wobei die Lehmoberputzschicht auf die Lehmunterputzschicht aufgetragen wird.

Es ist ferner bevorzugt, dass vor dem Auftragen der Lehmoberputzschicht ein Gewebe in die Lehmunterputzschicht eingearbeitet wird.

Es ist zudem bevorzugt, dass das Verfahren gemäß der dritten Ausführungsform weiter einen Schritt des Auftragens einer Lehmoberfarbe als oberste Schicht umfasst.

Des Weiteren ist es bevorzugt, dass das Verfahren gemäß der dritten Ausführungsform weiter einen Schritt des Auftragens einer Lehmfarbengrundierung vor dem Auftragen der Lehmoberfarbe umfasst und die Lehmoberfarbe auf die Lehmfarbengrundierung aufgetragen wird.

Das Verfahren gemäß der dritten Ausführungsform umfasst vorzugsweise einen Schritt des Vorbehandelns des Putzuntergrunds mit Spritzbewurf oder Tiefengrund vor dem Auftragen des Lchmputzmaterials.

Zudem ist es bevorzugt, dass wenn der Putzuntergrund Lehm enthält, das Verfahren weiter einen Schritt des Auftragens einer Zwischenschicht vor dem Auftragen der Lehmunterputzschicht umfasst.

Die Art des Auftragens der verschiedenen Schichten ist hierbei nicht begrenzt. Es können die allgemein bekannten Verfahren zur Auftragung verwendet werden. Insbesondere kann das Lehmputzmaterial händisch oder maschinell aufgetragen werden.

In einer vierten Ausführungsform betrifft die vorliegende Erfindung die Verwendung des Baustoffmaterials gemäß der ersten Ausführungsform zur Absorption von Thoron. Zudem ist es bevorzugt, dass das Baustoffmaterial zur Reduzierung der Thoronexhalation in Innenräumen verwendet wird.

Die vorliegende Erfindung betrifft ebenso die Verwendung des Baustoffmaterials gemäß der ersten Ausführungsform zum Verputzen eines Putzuntergrunds, vorzugsweise von Rauminnenwänden.

Die vorliegende Erfindung ist wie in den Ansprüchen definiert.

Eine bevorzugte Ausführungsform ist der Lehmputz gemäß der zweiten Ausführungsform, wobei der Tiefengrund Acrylharz und/oder eine Kunststoffdispersion enthält.

Eine weitere bevorzugte Ausführungsform ist der Lehmputz gemäß der zweiten Ausführungsform, wobei
die Lehmunterputzschicht eine Dicke im Bereich von 2 bis 20 mm, bevorzugt im Bereich von 3 bis 10 mm,
die Lehmoberputzschicht eine Dicke im Bereich von 2 bis 10 mm, bevorzugt im Bereich von 3 bis 5 mm,
die Lehmfarbengrundierung eine Dicke im Bereich von 0,05 bis 1,0 mm, bevorzugt im Bereich von 0,1 bis 0,3 mm,
und die Lehmoberfarbe eine Dicke im Bereich von 0,05 bis 1,0 mm, bevorzugt im Bereich von 0,1 bis 0,3 mm aufweist.

### Beispiele

Im Folgenden wird die vorliegende Erfindung durch Beispiele detailliert erläutert. Die Erfindung ist jedoch nicht auf die Beispiele begrenzt.

### Messung der Thoronexhalation

Unter Thoronexhalation ist im Allgemeinen die Thoronbelastung ausgehend von verschiedenen Lehmputzen zu verstehen. Diese wird in Becquerel pro Quadratmeter und Sekunde (Bq/m²·s) angegeben. Die Thoronexhalation wurde mit dem Messgerät ERS-2-S der Firma TRACERLAB Umwelt- und Strahlenschutzgeräte GmbH gemessen. Das Messgerät Messwerte der Thoronkonzentration in Bq/m³ aus, welche mit Hilfe einer vom Helmholtzinstitut in München entwickelten PC-Software in Bq/m²·s umgerechnet wurden. Eine detaillierte Beschreibung der Messmethode wird von P. Tuccimeia, M. Moronic und D. Norcia beschrieben (Applied Radiation and Isotopes 64 (2006), S. 254-263).

Die Messungen werden mit fertigen Lehmputzplatten durchgeführt. Die verwendeten Probenplatten werden wie folgt hergestellt:
Wenn die Thoronexhalation der Lehmbasis eines Lehmputzes gemessen werden soll, werden die Komponenten der Lehmbasis (Ton, Schluff und gegebenenfalls Sand ohne Beimischungen) gemischt um eine Trockenmischung oder eine erdfeuchte Mischung zu erhalten. Alternativ kann ein (gegebenenfalls aufbereiteter) Rohlehm als Lehmbasis verwendet werden.
Wenn die Thoronexhalation eines Lehmputzes gemessen werden soll, werden die Komponenten der Lehmbasis (Ton, Schluff und gegebenenfalls Sand) gemischt, die Beimischungen gemischt und anschließend die gemischte Lehmbasis mit den gemischten Beimischungen gemischt um eine Trockenmischung oder eine erdfeuchte Mischung zu erhalten. Alternativ wird wiederum der (gegebenenfalls aufbereitete) Rohlehm als Lehmbasis verwendet.

Dabei werden alle Gewichte der verschiedenen Komponenten festgehalten. Wenn der Lehmputz mehrere Schichten umfasst, werden für jede Schicht entsprechende Trockenmischungen oder erdfeuchte Mischungen hergestellt.

Die fertigen Trockenmischungen oder erdfeuchten Mischungen (Testlehmmischungen) werden dann mit Wasser aufgerührt und somit in praxisnahe putzfähige Konsistenz gebracht, um eine verarbeitungsfähige Testlehmmischung mit einem Feuchtigkeitsgehalt von 10 bis 25 Gew.% zu erhalten.

Soweit nichts anderes angegeben ist, werden die Testlehmmischungen wie folgt aufgetragen:
Die verarbeitungsfertige Testlehmmischung wird 10 mm dick auf eine thoronneutrale Trägerplatte (Fermacellplatte) aufgebracht und eben abgerieben um eine erste Lehmputzschicht zu erhalten. Die Trägerplatten haben eine Länge von 30 cm und eine Breite von 30 cm. In diesem Zustand trocknct die Testplatte ab. Wenn die Produktionsfeuchte abgetrocknet ist, wird eine zweite Lehmputzschicht genauso aufbereitet, aber die Testlehmmischung wird nur 5 mm dick aufgetragen. Wenn der Lehmputz weitere Schichten enthält, werden diese entsprechend aufgetragen.

Wenn die Produktionsfeuchte abgetrocknet ist, werden die Thoronexhaltionsmessungen durchgeführt. Bei Bedarf können auch Thoronexhaltionsmessungen vor dem Auftragen der zweiten und/oder weiteren Schichten erfolgen. Durch Bestimmung der Thoronexhalation nach dem Auftragen jeder einzelnen Schicht lässt sich erkennen wie die Schichten an der Gesamtthoronexhalation beteiligt sind.

Auf diese Art und Weise werden Messungen an fertigen Lehmputzoberflächen durchgeführt, die den Oberflächen in der Praxis sehr nahe kommen, bzw. identisch sind. Die einzelnen Arbeitsschritte sind klar definiert und jederzeit entsprechend wiederholbar. Dadurch wird eine gute Vergleichbarkeit zwischen den verschiedenen Lehmputzmischungen erreicht.

### Beispiel 1

Zunächst wurde ein Lehmputzmaterial ohne Beimischung als Referenzmaterial hergestellt. Hierfür wurden zunächst Ton, Schluff und Sand gemischt um eine Lehmbasis zu erhalten. Die Gewichtsanteile sind in der nachfolgenden Tabelle 1 zusammengefasst. Die fertige Lehmbasis wurde in einer Dicke von 1 cm auf einen neutralen Untergrund aufgetragen und anschließend die Thoronexhalation gemessen.

Für das erfindungsgemäße Beispiel wurde zu der Lehmbasis Aktivkohle hinzugemischt. Die Gewichtsanteile, sowie die verwendeten Materialien sind in der nachfolgenden Tabelle 1 zusammengefasst. Die fertige Lehmbasis mit Aktivkohle als Beimischung wurde ebenso in einer Dicke von 1 cm auf einen neutralen Untergrund aufgetragen und anschließend die Thoronexhalation gemessen.

Für die Lehmbasis wurden Tonmineral WF von der Firma Carl Jäger, sowie Schluff und Sand von der Finna Clausen, Kieswerk aus Oeversee bezogen. Als Aktivkohle wurde CarboTech PAK C1000S verwendet, mit einer Jodzahl von mindestens 950 mg/g, einer Kornverteilung bei der mindestens 85 % eine Korngröße von kleiner 100 µm haben und einer BET Oberfläche von 1050 m²/g.

Durch die Zumischung von Aktivkohle konnte die Thoronexhalation der Lehmbasis ohne Beimischung von 0,397 Bq/m²s auf 0,116 Bq/m²s reduziert werden. Luftfeuchteaufnahme und -abgabe konnten um 21.5 % durch die Beimischung erhöht werden. Zudem hat sich der Dämmwert des Lehmputzes mit Beimischungen um 6,25 % erhöht verglichen mit dem Lehmputz ohne Beimischung von Aktivkohle.

**Tabelle 1:**

| **Beispiel 1 (Testplatte 3-5)** | |
|---|---|
| Kategorie | 1 |

| **Lehmputzmaterial ohne Beimischung** | |
|---|---|
| Lehmputzart | Lehmunterputz |
| | |
| *Gewichtsanteile:* | |
| Tonmineralanteil in Gew.% | 18,6 |
| Schluffanteil in Gew.% | 21,1 |
| Sandanteil in Gew.% | 60,3 |
| maximale Korngröße in mm | 2 |
| | |
| Auftragsstärke auf thoronneutralem Putzuntergrund in cm | 1 |
| Thoronexhalation in Bq/m²s | 0,397 |
| | |
| *Raumklimawerte:* | |
| Luftfeuchteaufnahme und -abgabe in g/m² (Adsorptionszeit 96 Stunden) | 65 |
| Dämmwert ( Lambda-Wert in W/mK) | 0,85 |
| | |

| **Lehmputzmaterial mit Beimischung** | |
|---|---|
| Lehmputzart | Lehmunterputz |
| | |
| *beigemischte Materialien:* | |
| Aktivkohle | PAK C 1000 S |
| | |
| *Gewichtsanteile:* | |
| Aktivkohleanteil in Gew.% | 6,5 |
| Tonmineralanteil in Gew.% | 17,1 |
| Schluffanteil in Gew.% | 20,2 |
| Sandanteil in Gew.% | 56,2 |
| maximale Korngröße in mm | 2 |
| | |
| Auftragsstärke auf thoronneutralem Putzuntergrund in cm | 1 |
| Thoronexhalation in Bq/m²s | 0,116 |
| | |
| *Raumklimawerte*/ *Verbesserung in %:* | |
| Luftfeuchteaufnahme und -abgabe in g/m² (Adsorptionszeit 96 Stunden) | 79/+21,5 % |
| Dämmwert ( Lambda-Wert in W/mK) | 0,80/+6,25 % |
| | |
| Reduzierung der Thoronexhalation in % | **70,1** |

### Beispiel 2

Zunächst wurde ein Lehmputzmaterial ohne Beimischung als Referenzmaterial hergestellt. Hierfür wurden zunächst Ton, Schluff und Sand gemischt um eine Lehmbasis zu erhalten. Die Gewichtsanteile sind in der nachfolgenden Tabelle 2 zusammengefasst. Die fertige Lehmbasis wurde in einer Dicke von 1 cm auf einen neutralen Untergrund aufgetragen und anschließend die Thoronexhalation gemessen.

Für das erfindungsgemäße Beispiel wurden zu der Lehmbasis Aktivkohle, sowie Blähtongranulat und Quarzsand hinzugemischt. Die Gewichtsanteile, sowie die verwendeten Materialien sind in der nachfolgenden Tabelle 2 zusammengefasst. Die fertige Lehmbasis mit Beimischungen wurde ebenso in einer Dicke von 1 cm auf einen neutralen Untergrund aufgetragen und anschließend die Thoronexhalation gemessen.

Für die Lehmbasis wurden Tonmineral WF von der Firma Carl Jäger, sowie Schluff und Sand von der Firma Clausen, Kieswerk aus Oeversee bezogen. Als Aktivkohle wurde CarboTech PAK C1000S verwendet, mit einer Jodzahl von mindestens 950 mg/g, einer Kornverteilung bei der mindestens 85 % eine Korngröße von kleiner 100 µm haben und einer BET Oberfläche von 1050 m²/g. Blähtongranulat wurde von der Firma Fibo ExClay und Quarzsand vom Quarzwerk MARX Feinsand bezogen.

Durch die Zumischung von Aktivkohle sowie weiteren Zuschlagstoffe, wie Blähtongranulat und Quarzsand konnte die Thoronexhalation der Lehmbasis ohne Beimischung von 0,384 Bq/m²s auf 0,089 Bq/m²s reduziert werden. Luftfeuchteaufnahme und -abgabe konnten um 24,6 % durch die Beimischungen erhöht werden. Zudem hat sich der Dämmwert des Lehmputzes mit Beimischungen um 8,2 % erhöht verglichen mit dem Lehmputz ohne Beimischung.

**Tabelle 2:**

| **Beispiel 2 (Testplatte 3-5)** | |
|---|---|
| Kategorie | **1** |

| **Lehmputzmaterial ohne Beimischung** | |
|---|---|
| Lehmputzart | Lehmunterputz |
| | |
| *Gewichtsanteile:* | |
| Tonmineralanteil in Gew.% | 18,6 |
| Schluffanteil in Gew.% | 21,1 |
| Sandanteil in Gew.% | 60,3 |
| maximale Korngröße in mm | 2 |
| | |
| Auftragsstärke auf thoronneutralem Putzuntergrund in cm | 1 |
| Thoronexhalation in Bq/m²s | **0,384** |
| | |
| *Raumklimawerte:* | |
| Luftfeuchteaufnahme und -abgabe in g/m² | 65 |
| Dämmwert ( Lambda-Wert in W/mK) | 0,85 |
| | |

| **Lehmputzmaterial mit Beimischung** | |
|---|---|
| Lehmputzart | Lehm unterputz |
| | |
| *beigemischte Materialien:* | |
| Aktivkohle | PAK C 1000 S |
| Blähtongranulat in mm | 0 - 2 |
| Heißluftgetrockneter Quarzsand in mm | 0,063 - 0,125 |
| | |
| *Gewichtsanteile:* | |
| Aktivkohleanteil in Gew.% | 6,5 |
| Blähtongranulat in Gew.% | 5,0 |
| Heißluftgetrockneter Quarzsand in Gew.% | 10,0 |
| Tonmineralanteil in Gew.% | 15,1 |
| Schluffanteil in Gew.% | 18,2 |
| Sandanteil in Gew.% | 45,2 |
| maximale Korngröße in mm | 2 |
| | |
| Auftragsstärke auf thoronneutralem Putzuntergrund in cm | 1 |
| Thoronexhalation in Bq/m²s | **0,089** |
| | |
| *Raumklimawerte*/ *Verbesserung in %:* | |
| Luftfeuchteaufnahme und -abgabe in g/m² | 81/+24,6 % |
| Dämmwert ( Lambda-Wert in W/mK) | 0,78/+8,2 % |
| | |
| Reduzierung der Thoronexhalation in % | **76,9** |

### Beispiel 3

Des Weiteren wurde eine erfindungsgemäße mineralische Grundierung mit dem bisherigen Stand der Technik verglichen. Hierfür wurde der in der Patentschrift NL 2013822 B1 offenbarte Farbanstrich zur Reduzierung der Thoronexhalation hergestellt und mit der vorliegenden Erfindung verglichen. Sowohl der Farbanstrich als auch die mineralische Grundierung wurden auf einen herkömmlichen Lehmputz aufgetragen und die resultierenden Eigenschaften miteinander verglichen. Als Lehmputz wurde das Lehmputzmaterial ohne Beimischung gemäß Beispiel 2 verwendet. Die mineralische Grundierung hatte folgende Zusammensetzung 50 % Blähgestein Volite 200; 10 % Aktivkohle CarboTech PAK C 1001 C; 35 % Schluff (Kreide Nordkrone 40) und 5 % Tonmineral 9010 von der Firma Maroton GmbH.

Die Wasserdampfdurchlässigkeit wurde nach DIN EN 1062-1 gemessen und kann allgemein in folgende 3 Klassen eingeteilt werden:

**Tabelle 3:**

| **Grenzwert laut DIN** | **SD - Wert in Meter** | **Wasserdampfdurchlässigkeit pro Stunde und m² in Gramm** |
|---|---|---|
| Niedrig durchlässig | größer als 1,4 | kleiner als 0,6 |
| Mittel durchlässig | 1,4 - 0,4 | 0,6 - 6 |
| Hoch durchlässig | kleiner 0,14 | größer als 6 |

Die wasserdampfdiffusionsäquivalente Luftschichtdicke SD ist ein bauphysikalisches Maß für den Wasserdampfdiffusionswiderstand eines Bauteils oder Bauteilschicht definierter Dicke und Diffusionswiderstandszahl. Sie beschreibt den Wasserdampfdiffusionswiderstand anschaulich, indem sie die Dicke angibt, welche eine ruhende Luftschicht haben muss, damit sie im stationären Zustand und unter denselben Randbedingungen von demselben Diffusionsstrom durchflossen wird, wie das betrachtete Bauteil.

Der SD-Wert einer aus mehreren hintereinanderliegenden Schichten bestehenden Bauteilschicht ist die Summe der SD-Werte der Einzelschichten.

In Tabelle 4 sind die erhaltenen Ergebnisse zusammengefasst.

**Tabelle 4:**

| **Thoronreduzierende Maßnahme an den Lehmoberflächen** | **SD WERT in Meter der Lehmputze** | **SD Wert in Meter der Anstrichsysteme** | **Wasserdampfdurchlässigkeitsklasse nach DIN EN 1062-1 der Anstrichsysteme** | **Einfluss auf Luftfeuchtig keitsaufnahme und -abgabe** | **Dämmwert** |
|---|---|---|---|---|---|
| Farbanstrich auf Polyvinylacetatbasis nach Patent NL 2013822 B1 | 3 | 1 - 10 | niedrig durchlässig | Reduzierung von 5 - 30 % | unverändert |
| Vinyltapeten nach Patent NL 2013822 B1 | 3 | 0,021 - 1,84 | mittel durchlässig bis niedrig durchlässig | Reduzierung Von 5 -30 % | unverändert |
| Erfindungsgemäßes Beispiel: mineralische Grundierung | 3 | 0,01 - 0,02 | hoch durchlässig | Erhöhung von 1-5 % | Erhöht um 2-3 % |

Es konnte gezeigt werden, dass durch das erfindungsgemäße Baustoffinaterial, die Thoronexhalation im Vergleich zu einem Lehmputz ohne Beimischung von Aktivkohle deutlich reduziert werden kann und zudem die Wasserdampfdurchlässigkeit erhöht werden kann. Zudem bleiben bei dem erfindungsgemäßen Baustoffmaterial die positiven Eigenschaften von Lehmputzen erhalten oder werden verbessert. Die Luftfeuchtigkeitsaufnahme und -abgabe konnte um 1 % bis 5 % erhöht werden. Auch der Dämmwert kann erhöht werden bei Verwendung des erfindungsgemäßen Baustoffmaterials im Vergleich zum Farbanstrich auf Polyvinylacetatbasis.

Zudem wird Vinylacetat seit Anfang 1992 in der MAK - Werteliste unter den "Arbeitsstoffen mit begründetem Verdacht auf krebserzeugendes Potenzial / MAK III B" geführt.

Die SD-Werte wurden wie folgt berechnet:

**Tabelle 5:**

| **Material** | **Wasserdampfdiffusionszahl** | **Schichtstärke** | **SD-Wert Berechnung** | **SD - Wert in m** |
|---|---|---|---|---|
| Latexfarbe auf Vinylacetatbasis | 5000 | 0,0002 m | 0,0002 x 5000 | 1 |
| Latexfarbe auf Vinylacetatbasis | 5000 | 0,002 m | 0,002 x 5000 | 10 |
| mineralische Grundierung | 10 | 0,001 m | 0,001 x 10 | 0,01 |
| mineralische Grundierung | 10 | 0,002 m | 0,002 x 10 | 0,02 |

### Beispiel 4:

In den Beispielen 4.1 bis 4.3 wurde zunächst die Thoronexhalation der Lehmbasis der vier Schichten ohne Beimischung gemessen (Ausgangswert).

In Abhängigkeit vom Ausgangswert der Thoronexhalation wurden die in Tabelle 6 gezeigten Beimischungen in der Lehmunterputzschicht, Lehmoberputzschicht, Lehmfarbengrundierung und der Lehmoberfarbe verwendet. In Beispiel 4.1 enthielten die Lehmfarbengrundierung und die Lehmoberfarbe keine zusätzlichen Beimischungen aufgrund der vergleichsweise geringen Ausgangsthoronexhalation der vier Lehmschichten ohne Beimischung.

In Beispiel 4.2 und 4.3 enthielten auch die Lehmfarbengrundierung, sowie die Lehmoberfarbe Beimischungen aufgrund der hohen gemessenen Ausgangswerte der Thoronexhalation der vier Schichten ohne Beimischung.

Die Lehmunterputzschicht wurde auf den Putzuntergrund mit einer Dicke von 10 mm aufgetragen. Anschließend wurde der Lehmoberputz mit einer Dicke von 5 mm aufgetragen. Darüber wurde die Lehmfarbengrundierung aufgetragen. Die Dicke betrug hier 0,3 mm. Als letzten Schritt wurde die Lehmoberfarbe aufgetragen mit einer Dicke von 0,1 mm.

Da in Beispiel 4.2 als Putzuntergrund eine Lehmbauplatte gewählt wurde, wurde aufgrund der Thoronexhalation der Lehmbauplatte noch eine Zwischenschicht verwendet. Diese ist eine mineralische Membran und enthält neben Aktivkohle, auch noch Biokohle, Blähgestein, Kreide und Cellulose. Die Zwischenschicht wurde direkt auf die Lehmbauplatte aufgetragen, um so die Thoronexhalation, die durch den Putzuntergrund hervorgerufen wird, bereits zu verringern.

Folgende Materialien wurden in diesem Beispiel verwendet:
Porenbeton (Porenbeton PP2 von Porit); Lehmbauplatte (Lehmbauplatte D 22 von Claytec); Lehmbasis (Lehmbasisputz von PRO LEHM); Aktivkohle (CarboTech PAK C 1000 S); Biokohle (Eigenherstellung aus Buschholz (1 bis 3 cm Durchmesser), Partikelgröße 0 bis 2 mm); Blähglas (Poraver 0,125-0)); Blähgestein 0,2 (Volite 200); Blähgestein 0,5 (Volite 500); Kreide (Nordkrone Schlämmkreide 40); Cellulose (Methylcellulose); Gesteinsmehl (Diabas Gesteinsmehl); Zeolith (Zeolithwelt Kinoptilolith 90 plus); Marmormehl (Nordkrone Marmormehl 30 µm). Soweit nichts anderes angegeben, wurde der genannte Lehmbasisputz als Lehmbasis verwendet. Wie der Tabelle 6 zu entnehmen ist, wurden in den Beispielen 4.1 bis 4.3 beim Lehmunterputz spezifische Lehmbasen verwendet.

**Tabelle 6:**

| | Beispiel 4.1 | Beispiel 4.2 | Beispiel 4.3 |
|---|---|---|---|
| vorhandener Putzuntergrund | Porenbeton | Lehnibauplatte | Porenbeton |
| Lehmputzkategorie bzgl. Thoronexhalation | I | III | II |
| Thoronexhalation der 4 Schichten ohne Beimischung (Ausgangswert) | 0.480 Bq/m²s | 1,075 Bq/m²s | 0,780 Bq/m²s |
| Materialkomponenten einer Zwischenschicht (mineralische Intensivmembran für belastete Untergründe) | keine | 5 % Biokohle | keine |
| | Zwischenschicht | 15 % Aktivkohle | Zwischenschicht |
| | notwendig | 5 % Blähglas | notwendig |
| | | 15 % Blähgestein 0,5 | |
| | | 59 % Kreide | |
| | | 1 % Cellulose | |
| Materialien der Lehmbasis und der Beimischung zur 1. Schicht Lehmunterputz | 11 % 3 Schicht-Tonmineral | 11 % 3 Schicht-Tonmineral | 24 % 3 Schicht-Tonmineral |
| | 22 % Schluff | 20 % Schluff | 27 % Schluff |
| | 67 % Sand | 61 % Sand | 49 % Sand |
| | | 3 % Aktivkohle | |
| | | 5 % Biokohle | |
| Materialien für die Beimischung zur 2. Schicht Lehmoberputz | 2 % Kieselgur | 4 % Algenkalk | 4 % Algenkalk |
| | 3 % Kalkgrieß | 2 % Kalkgrieß | 2 % Kalkgrieß |
| | 3 % Aktivkohle | 5 % Aktivkohle | 4 % Aktivkohle |
| Materialien für die Beimischung zur 3. Schicht Lehmfarbengrundierung | keine | 74 % Gesteinsmehl | 74 % Gesteinsmehl |
| | Beimischung | 10 % Blähgestein 0,5 | 10 % Blähgestein 0,5 |
| | notwendig | 5 % Zeolith | 5 % Zeolithe |
| | | 10 % Aktivkohle | 10 % Aktivkohle |
| | | 1 % Cellulose | 1 % Cellulose |
| Materialien für die Beimischung zur 4. Schicht Lehmoberfarbe | keine | 79 % Marmormehl | 79 % Marmormehl |
| | Beimischung | 20 % Blähgestein 0,2 | 20 % Blähgestein 0,2 |
| | notwendig | 1 % Cellulose | 1 % Cellulose |
| Thoronexhalation der 4 Schichten mit erfindungsgemäßen Beimischungen (verbesserter Endwert) | 0,14 Bq/m²s | 0,12 Bq/m²s | 0,10 Bq/m²s |
| Reduzierung zum Ausgangswert | 71 % | 88 % | 87 % |

Wie Tabelle 6 zu entnehmen ist. konnte in allen drei Fällen durch den erfindungsgemäßen Lehmputz die Thoronexhalation deutlich reduziert werden. In Beispiel 4.1 um 71 %, in Beispiel 4.2 um 88 % und in Beispiel 4.3 um 87 %.

### Beispiel 5 (Thoronreduzierung durch mineralische Grundierung)

Als Trägermaterial wurde eine Fermacellplatte verwendet. Auf die Fermacellplatte wurden handelsübliche Lehmputze mit verschieden starker Thoronexhalation in einer Dicke von 1 cm aufgetragen. Danach wurde die Thoronexhalation bestimmt (Thoronexhalation der Testplatten ohne Grundierung). Anschließend wurden die verputzten Testplatten mit einer mineralischen Grundierung gestrichen (1 mm stark). Die mineralische Grundierung hatte folgende Zusammensetzung 50 % Blähgestein Volite 200; 10 % Aktivkohle Carbo Tech PAK C 1001 C; 35 % Schluff (Kreide Nordkrone 40) und 5 % Tonmineral 9010 von der Firma Maroton GmbH. Danach wurde wiederum die Thoronexhalation gemessen (Thoronexhalation der Testbauplatten nach Auftrag einer Schicht mineralischer Grundierung).

| **Testplatten (TP) Nummer** | **Thoronexhalation der Testplatten ohne Grundierung in Bq/m²s** | **Thoronexhalation der Testplatten nach Auftrag einer Schicht mineralischer Grundierung in Bq/m²s** | **Thoronreduzierung in %** |
|---|---|---|---|
| TP 3-7 | 0,352 | 0,108 | 69,3 |
| TP 4-3 | 0,607 | 0,217 | 64,3 |
| TP 8-3 | 0,415 | 0,184 | 55,7 |
| TP 10-2 | 0,512 | 0,187 | 63,5 |
| TP 11-4 | 0,325 | 0,107 | 67,1 |

### Beispiel 6 (Thoronreduzierung durch mineralische Grundierung)

Als Trägermaterial wurde bei diesen Versuchen nicht eine Fermacellplatte genommen, sondern handelsübliche Lehmbauplatten (Claytec D 22; Pro Lehm LP 2). Diese Lehmbauplatten wurden mit einer mineralischen Grundierung gestrichen (1 mm stark). Die mineralische Grundierung hatte folgende Zusammensetzung 50 % Blähgestein Volite 200: 10 % Aktivkohle Carbo Tech PAK C 1001 C; 35 % Schluff (Kreide Nordkrone 40) und 5 % Tonmineral 9010 von der Firma Maroton GmbH. Gemessen wurde die Thoronexhalation der Lehmbauplatte ohne Grundierung und dann mit Grundierung.

| **Lehmbauplatten Nummer** | **Thoronexhalation von Lehmbauplatten ohne Grundierung in Bq/m²s** | **Thoronexhalation nach Auftrag einer Schicht mineralischer Grundierung in Bq/m²s** | **Thoronreduzierung in %** |
|---|---|---|---|
| CTLPD22 | 1,131 | 0,676 | 40,2 |
| PL LP 2 | 0,531 | 0,193 | 63,7 |

## Patentansprüche

1. Ein Baustoffmaterial umfassend
eine Lehmbasis und eine Beimischung,
wobei die Beimischung Aktivkohle umfasst und der Aktivkohleanteil 0,1 bis 10 Gew.%,
bezogen auf die Trockenmasse des Baustoffmaterials, beträgt, und
wobei das Baustoffmaterial eine Trockenmischung ist oder das Baustoffmaterial einen Feuchtigkeitsgehalt von 1 bis 25 Gew.%, bezogen auf das Gesamtgewicht des Baustoffmaterials, aufweist.

2. Das Baustoffmaterial gemäß Anspruch 1, wobei
der Aktivkohleanteil 0,25 bis 8 Gew.%, bevorzugt 0,5 bis 5 Gew.%, besonders bevorzugt 1 bis 5 Gew.%, bezogen auf die Trockenmasse des Baustoffmaterials, beträgt.

3. Das Baustoffmaterial gemäß Anspruch 1 oder 2, wobei die Lehmbasis zu 30 bis 99,9 Gew.%, vorzugsweise 50 bis 99,5 Gew.%, besonders bevorzugt 70 bis 99 Gew.%, ganz besonders bevorzugt 90 bis 99 Gew.%, bezogen auf die Trockenmasse des Baustoffmaterials, in dem Baustoffmaterial enthalten ist.

4. Das Baustoffmaterial gemäß einem der Ansprüche 1 bis 3, wobei die Aktivkohle eine BET-Oberfläche von 300 bis 3000 g/m², bevorzugt 500 bis 2000 g/m², besonders bevorzugt 700 bis 1500 g/m² aufweist, wobei die BET-Oberfläche gemäß DIN ISO 9277 bestimmt wird.

5. Das Baustoffmaterial gemäß einem der Ansprüche 1 bis 4, wobei die Beimischung weiter Zuschlagstoffe ausgewählt aus der Gruppe bestehend aus porösen Materialien, Tonmineralen, Füllstoffen, organischen Materialien und Mischungen davon umfasst.

6. Das Baustoffmaterial gemäß einem der Ansprüche 1 bis 5, wobei das Baustoffmaterial einen Feuchtigkeitsgehalt von 1 bis 7 Gew.%, bevorzugt von 3 bis 7 Gew.%, bezogen auf das Gesamtgewicht des Baustoffmaterials, aufweist.

7. Verfahren zur Herstellung des Baustoffmaterials gemäß einem der Ansprüche 1 bis 6, wobei die Lehmbasis mit der Aktivkohle umfassenden Beimischung gemischt wird, wobei vorzugsweise vorher Ton, Schluff und gegebenenfalls Sand gemischt werden um die Lehmbasis zu erhalten, oder natürlicher Rohlehm, der im Wesentlichen aus Ton, Schluff und Sand besteht, aufbereitet wird um die Lehmbasis zu erhalten.

8. Eine Lehmbauplatte oder ein Lehmstein, welche aus dem Baustoffmaterial gemäß einem der Ansprüche 1 bis 6 hergestellt ist.

9. Ein Lehmputz auf mindestens einer Oberfläche eines Putzuntergrunds umfassend das Baustoffmaterial gemäß einem der Ansprüche 1 bis 6.

10. Der Lehmputz gemäß Anspruch 9, wobei
gegebenenfalls der Putzuntergrund mit einem Spritzbewurf oder Tiefengrund vorbehandelt ist;
der Lehmputz in dieser Reihenfolge ausgehend von der Oberfläche des Putzuntergrunds eine Lehmunterputzschicht;
eine Lehmoberputzschicht auf der Lehmunterputzschicht;
gegebenenfalls eine Lehmfarbengrundierung auf der Lehmoberputzschicht;
und gegebenenfalls eine Lehmoberfarbe als oberste Schicht umfasst,
wobei mindestens eine Schicht ausgewählt aus der Lehmunterputzschicht, der Lehmoberputzschicht und der Lehmfarbengrundierung Aktivkohle enthält, und
gegebenenfalls, falls der Putzuntergrund Lehm umfasst, eine Zwischenschicht umfasst,
welche sich zwischen Lehmunterputzschicht und Putzuntergrund befindet und wobei die Zwischenschicht Aktivkohle umfasst.

11. Der Lehmputz gemäß Anspruch 9 oder 10, wobei
der Putzuntergrund ausgewählt aus Gipskartonplatten, Gipsfaserplatten, Lehmbauplatten, Lehmsteinen, Porenbeton, Porenziegeln, Kalksandstein, Ziegeln und Beton ist.

12. Der Lehmputz gemäß einem der Ansprüche 9 bis 11, wobei der Putzuntergrund ein Fertigbauteil, eine Rauminnenwand, die Innenseite einer Raumaußenwand, oder die Decke eines Innenraums ist.

13. Verwendung des Baustoffmaterials gemäß einem der Ansprüche 1 bis 6 zur Reduzierung der Thoronexhalation in Innenräumen.

14. Verwendung des Baustoffmaterials gemäß einem der Ansprüche 1 bis 6 zum Verputzen eines Putzuntergrunds, vorzugsweise von Rauminnenwänden.

## Claims

1. A construction material comprising
a loam base and an admixture,
wherein said admixture comprises activated carbon and the activated carbon proportion is from 0.1 to 10 % by weight, based on the dry weight of the construction material, and
wherein the construction material is a dry blend or the construction material has a moisture content of from 1 to 25 % by weight, based on the total weight of the construction material.

2. The construction material according to claim 1, wherein
the activated carbon proportion is from 0.25 to 8 % by weight, preferably from 0.5 to 5 % by weight, particularly preferred from 1 to 5 % by weight, based on the dry weight of the construction material.

3. The construction material according to claim 1 or 2, wherein the loam base is contained in the construction material at from 30 to 99.9 % by weight, preferably from 50 to 99.5 % by weight, particularly preferred from 70 to 99 % by weight, more particularly preferred from 90 to 99 % by weight, based on the dry weight of the construction material.

4. The construction material according to any one of claims 1 to 3, wherein
the activated carbon has a BET surface of from 300 to 3000 g/m², preferably from 500 to 2000 g/m², particularly preferred from 700 to 1500 g/m², wherein the BET surface is determined in accordance with DIN ISO 9277.

5. The construction material according to any one of claims 1 to 4, wherein
the admixture further comprises additives selected from the group consisting of porous materials, clay minerals, fillers, organic materials and mixtures thereof.

6. The construction material according to any one of claims 1 to 5, wherein the construction material has a moisture content of from 1 to 7 % by weight, preferably from 3 to 7 % by weight, based on the total weight of the construction material.

7. A process of producing the construction material according to any one of claims 1 to 6, wherein the loam base is blended with the admixture comprising activated carbon, wherein clay, silt and optionally sand are preferably blended in advance in order to obtain the loam base, or natural crude loam essentially consisting of clay, silt and sand is processed in order to obtain the loam base.

8. A loam building board or a loam stone which is produced from the construction material according to any one of claims 1 to 6.

9. A loam plaster on at least one surface of a plaster base comprising the construction material according to any one of claims 1 to 6.

10. The loam plaster according to claim 9, wherein
the plaster base is optionally pretreated with a rough cast or deep primer;
the loam plaster comprising, in this order, starting from the surface of the plaster base, a loam rendering coat;
a loam finishing coat on the loam rendering coat;
optionally a loam paint primer on the loam finishing coat;
and optionally a loam upper paint as the uppermost layer,
wherein at least one layer selected from the loam rendering coat, the loam finishing coat and the loam paint primer contains activated carbon and
optionally, in case the plaster base comprises loam, comprises an intermediate layer which is located between the loam rendering coat and the plaster base and wherein the intermediate layer comprises activated carbon.

11. The loam plaster according to claim 9 or 10, wherein
the plaster base is selected from gypsum plasterboards, gypsum fiberboards, loam building boards, loam stones, porous concrete, porous bricks, sand-lime bricks, bricks and concrete.

12. The loam plaster according to any one of claims 9 to 11, wherein the plaster base is a prefabricated part, an interior wall of a room, the inner side of an exterior wall of a room or the ceiling of an inner room.

13. Use of the construction material according to any one of claims 1 to 6 for reducing thoron exhalation in inner rooms.

14. Use of the construction material according to any one of claims 1 to 6 for plastering a plaster base, preferably of interior walls of a room.

## Revendications

1. Matériau de construction, comprenant
une base argileuse et un adjuvant,
l'adjuvant comprenant du charbon actif et la proportion de charbon actif étant de 0,1 à 10 % en poids, par rapport à la matière sèche du matériau de construction, et le matériau de construction étant un mélange sec ou le matériau de construction présentant une teneur en humidité de 1 à 25 % en poids, par rapport au poids total du matériau de construction.

2. Matériau de construction selon la revendication 1, dans lequel
la proportion de charbon actif est de 0,25 à 8 % en poids, de préférence 0,5 à 5 % en poids, de manière particulièrement préférée de 1 à 5 % en poids, par rapport à la matière sèche du matériau de construction.

3. Matériau de construction selon la revendication 1 ou 2, dans lequel la base argileuse est présente dans le matériau de construction à 30 à 99,9 % en poids, de préférence 50 à 99,5 % en poids, de manière particulièrement préférée 70 à 99 % en poids, de manière tout à fait préférée 90 à 99 % en poids, par rapport à la matière sèche du matériau de construction.

4. Matériau de construction selon l'une des revendications 1 à 3, dans lequel le charbon actif présente une surface BET de 300 à 3000 g/m², de préférence 500 à 2000 g/m², de manière particulièrement préférée de 700 à 1500 g/m², la surface BET étant déterminée d'après le norme DIN ISO 9277.

5. Matériau de construction selon l'une des revendications 1 à 4, dans lequel l'adjuvant comprend en outre des additifs choisis dans le groupe constitué des matériaux poreux, des minéraux argileux, des matières de charge, des matériaux organiques et mélanges de ceux-ci.

6. Matériau de construction selon l'une des revendications 1 à 5, le matériau de construction présentant une teneur en humidité de 1 à 7 % en poids, de préférence de 3 à 7 % en poids, par rapport au poids total du matériau de construction.

7. Procédé de fabrication du matériau de construction selon l'une des revendications 1 à 6, dans lequel la base argileuse est mélangée avec l'adjuvant comprenant du charbon actif, dans lequel de l'argile, du limon, et le cas échéant du sable sont mélangés de préférence au préalable pour obtenir la base argileuse, ou l'argile brute naturelle qui se compose essentiellement d'argile, de limon et de sable, est préparée pour obtenir la base argileuse.

8. Panneau de construction en pisé ou brique argileuse, qui est fabriqué à partir du matériau de construction selon l'une des revendications 1 à 6.

9. Enduit argileux sur au moins une surface d'un substrat d'enduit, comprenant le matériau de construction selon l'une des revendications 1 à 6.

10. Enduit argileux selon la revendication 9, dans lequel
le cas échéant le substrat d'enduit est prétraité avec un crépi projeté ou un fond dur ;
l'enduit argileux se compose, dans cet ordre en partant de la surface du substrat d'enduit,
d'une sous-couche d'enduit argileux ;
d'une couche supérieure d'enduit argileux sur la sous-couche d'enduit argileux ;
le cas échéant d'un apprêt coloré argileux sur la couche supérieure d'enduit argileux ;
et le cas échéant d'une peinture supérieure argileuse comme couche de surface,
dans lequel au moins une couche choisie parmi la sous-couche d'enduit argileux, la couche supérieure d'enduit argileux et l'apprêt coloré argileux contient du charbon actif, et
le cas échéant, si le substrat d'enduit comprend de l'argile, comprend une couche intermédiaire qui se trouve entre la sous-couche d'enduit argileux et le substrat d'enduit et dans lequel la couche intermédiaire comprend du charbon actif.

11. Enduit argileux selon la revendication 9 ou 10, dans lequel
le substrat d'enduit est choisi parmi les plaques de plâtre cartonnées, les plaques de plâtre renforcées de fibres, les panneaux de construction en pisé, les briques argileuses, le béton cellulaire, les briques cellulaires, la brique silico-calcaire, les briques et le béton.

12. Enduit argileux selon l'une des revendications 9 à 11, dans lequel le substrat d'enduit est un composant fini, une paroi intérieure de pièce, la face intérieure d'une paroi extérieure de pièce ou le plafond d'un espace intérieur.

13. Utilisation du matériau de construction selon l'une des revendications 1 à 6 pour la réduction de l'émission de thoron dans les espaces intérieurs.

14. Utilisation du matériau de construction selon l'une des revendications 1 à 6 pour enduire un substrat d'enduit, de préférence des parois intérieures d'une pièce.
